(19) **Europäisches Patentamt**
**European Patent Office**
**Office européen des brevets**

(11) **EP 2 339 802 B1**

(12) **EUROPÄISCHE PATENTSCHRIFT**

(45) Veröffentlichungstag und Bekanntmachung des Hinweises auf die Patenterteilung:
**23.05.2018 Patentblatt 2018/21**

(21) Anmeldenummer: **10014882.4**

(22) Anmeldetag: **23.11.2010**

(51) Int Cl.:
*H04L 25/02* (2006.01)     *H04L 27/00* (2006.01)

(54) **Verfahren und Vorrichtung zum gemeinsamen Schätzen mehrerer Kenngrößen eines Übertragungskanals**

Method and device for joint assessment of multiple parameters of a transmission channel

Procédé et dispositif d'évaluation commune de plusieurs grandeurs de référence d'un canal de transmission

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009 DE 102009060156**
**28.01.2010 DE 102010006045**

(43) Veröffentlichungstag der Anmeldung:
**29.06.2011 Patentblatt 2011/26**

(73) Patentinhaber: **Rohde & Schwarz GmbH & Co. KG**
**81671 München (DE)**

(72) Erfinder:
• **Volyanskiy, Mikhail**
**86150 Augsburg (DE)**
• **Nitsch, Bernhard, Dr.**
**81825 München (DE)**

(74) Vertreter: **Körfer, Thomas et al**
**Mitscherlich PartmbB**
**Patent- und Rechtsanwälte**
**Postfach 33 06 09**
**80066 München (DE)**

(56) Entgegenhaltungen:
**DE-A1- 10 206 966     DE-B4- 10 157 247**

• **RONGHONG MO ET AL: "An EM-Based Semiblind Joint Channel and Frequency Offset Estimator for OFDM Systems Over Frequency-Selective Fading Channels", IEEE TRANSACTIONS ON VEHICULAR TECHNOLOGY, IEEE SERVICE CENTER, PISCATAWAY, NJ, US, Bd. 57, Nr. 5, 1. September 2008 (2008-09-01), Seiten 3275-3282, XP011224817, ISSN: 0018-9545, DOI: 10.1109/TVT.2008.917240**

**Beschreibung**

Die Erfindung betrifft ein Verfahren und eine Vorrichtung zum gemeinsamen Schätzen mehrerer Kenngrößen eines Übertragungskanals.

Im Übertragungskanal erfährt ein Sendesignal zahlreiche Veränderungen. Neben einer Verstärkung der Signalamplitude um einen bestimmten Verstärkungsfaktor sind es im wesentlichen eine Zeitverzögerung um einen bestimmten Zeitoffset (Zeitversatz), eine Frequenzverzerrung der Trägerfrequenz um einen bestimmten Frequenzoffset (Frequenzversatz) und eine Phasenverzerrung um einen bestimmten Phasenoffset (Phasenversatz). Diese Veränderungen im Empfangssignal gegenüber dem Sendesignal müssen im Empfänger im Hinblick auf eine korrekte Detektion der im Sende- bzw. Empfangssignal übertragenen Nachricht geschätzt werden.

Aus der DE 101 57 247 B4 ist ein Verfahren zum gemeinsamen Schätzen mehrerer Kenngrößen eines Übertragungskanals auf der Basis einer Kosten-Funktion bekannt. Nachteilig am bekannten Verfahren ist die Vielzahl von Einzeltermen in der Kosten-Funktion und die Komplexität innerhalb der Einzelterme, die die Ermittlung der Schätzwerte für die Kenngrößen mittels Gradientenbildung der Kosten-Funktion und anschließendem Nullsetzen erheblich verkomplizieren. Aus der DE 102 06 966 A1 ist ein Verfahren zum Schätzen von Verstärkungsfaktoren eines CDMA-Signals bekannt. Die Aufgabe der Erfindung ist es deshalb, ein Verfahren und eine Vorrichtung zum gemeinsamen Schätzen mehrerer Kenngrößen eines Übertragungskanals zu schaffen, das bzw. die durch eine geringere Komplexität und damit einen geringeren Bedarf an technischer Verarbeitungsleistung gekennzeichnet ist.

Die Erfindungsaufgabe wird durch ein Verfahren zum gemeinsamen Schätzen mehrerer Kenngrößen eines Übertragungskanals mit den Merkmalen des Patentanspruchs 1 und durch eine Vorrichtung zum gemeinsamen Schätzen mehrerer Kenngrößen eines Übertragungskanals mit den Merkmalen des Patentanspruchs 6 gelöst.

Erfindungsgemäß werden hierzu einmalig zu Beginn Zwischengrößen ermittelt, die einzig von a-priori bekannten Signalen abhängig sind, sowie kontinuierlich ein Empfangssignalvektor erfasst und kontinuierlich oder blockorientiert vom Empfangssignalvektor abhängige Zwischengrößen ermittelt. Durch Lösen eines von den ermittelten Zwischengrößen abhängigen linearen Gleichungssystems wird der zu schätzende Zeit-, Frequenz- und Phasenversatz bestimmt und über eine funktionale Beziehung der zu schätzende Verstärkungsfaktor aus dem zu schätzenden Zeitversatz ermittelt.

Die funktionale Abhängigkeit der einzelnen zu ermittelnden Zwischengrößen wird durch Bestimmung eines Empfangssignalvektors in Abhängigkeit eines Sendesignalvektors, eines Rauschsignalvektors und von den zu schätzenden Kenngrößen des Übertragungskanals in einem Basisbandmodell, durch Linearisierung des Empfangssignalvektors und durch Bestimmung einer Likelihood-Funktion (Wahrscheinlichkeitsfunktion), insbesondere einer Log-Likelihood-Funktion, in Abhängigkeit des linearisierten Empfangssignalvektors gewonnen.

Im Basisbandmodell werden im linearisierten Empfangssignalvektor zur Vereinfachung der Verarbeitungskomplexität sämtliche Produkte, die jeweils mehrere zu schätzende kleine Kenngrößen enthalten, vernachlässigt.

Das lineare Gleichungssystem wird mittels Gradientenbildung der Likelihood-Funktion und Nullsetzen des ermittelten Gradienten ermittelt. Da das Nullsetzen des Gradienten ein nicht geschlossen lösbares nichtlineares Gleichungssystem für die zu schätzenden Kenngrößen Verstärkungsfaktor, Zeit-, Frequenz- und Phasenversatz liefert, wird durch algebraische Umformung das geschlossen lösbare lineare Gleichungssystem für die zu schätzenden Kenngrößen Zeit-, Frequenz- und Phasenversatz und die funktionale Beziehung zwischen dem zu schätzenden Verstärkungsfaktor und dem zu schätzenden Zeitversatz ermittelt.

Das Verfahren arbeitet bevorzugt mittels einer elektronischen Recheneinrichtung oder in Hardware mit Logikgattern z.B. eines FPGA-Bausteins.

Im Folgenden werden das erfindungsgemäße Verfahren und die erfindungsgemäße Vorrichtung zum gemeinsamen Schätzen mehrerer Kenngrößen eines Übertragungskanals anhand der Zeichnung im Detail erläutert. Die Figuren der Zeichnung zeigen:

Fig. 1   ein Flussdiagram des erfindungsgemäßen Verfahrens zum gemeinsamen Schätzen mehrerer Kenngrößen eines Übertragungskanals und

Fig. 2   ein Blockdiagramm der erfindungsgemäßen Vorrichtung zum gemeinsamen Schätzen mehrerer Kenngrößen eines Übertragungskanals.

Im Folgenden werden die mathematischen Grundlagen des Log-Likelihood-Schätzers hergeleitet:

Das Empfangssignal $r(n \cdot T)$ ergibt sich nach einer Mischung ins Basisband und einer Abtastung mit der Abtastrate $\frac{1}{T}$.

gemäß Gleichung (1) aus dem a-priori oder durch Detektion im Empfänger bekannten mit der Abtastrate $\dfrac{1}{T}$ abgetasteten Sendesignal $s(n \cdot T)$ und einem überlagerten und mit der Abtastrate $\dfrac{1}{T}$ abgetasteten Rauschsignal $v(n \cdot T)$ unter der Berücksichtigung des von Null verschiedenen Verstärkungsfaktors $g$, des Zeitversatzes $\tau$, des Frequenzversatzes $\Delta f$ und des Phasenversatzes $\varphi$. Das Rauschsignal $v(n \cdot T)$ stellt dabei komplexes weißes, gaussverteiltes Rauschen bevorzugt mit Mittelwert Null dar.

$$r(n \cdot T) = g \cdot s(n \cdot T - \tau) \cdot e^{j 2\pi \cdot \Delta f \cdot n \cdot T} \cdot e^{j\varphi} + v(n \cdot T) \quad \text{mit} \quad n = 0, \ldots, N-1 \quad (1)$$

Unter Einführung der mit der Abtast-Frequenz normierten Kreisfrequenz $\omega = 2\pi \Delta f \cdot T$ ergibt sich für das Empfangssignal $r(n \cdot T)$ ausgehend von Gleichung (1) die Beziehung in Gleichung (2).

$$r(n \cdot T) = g \cdot s(n \cdot T - \tau) \cdot e^{j\omega \cdot n} \cdot e^{j\varphi} + v(n \cdot T) \quad \text{mit} \quad n = 0, \ldots, N-1 \quad (2)$$

Unter der generellen Voraussetzung, dass der Zeitversatz $\tau$, der Frequenzversatz $\Delta f$ und der Phasenversatz $\varphi$ kleine Werte aufweisen, können die Exponentialterme $e^{j\omega n}$ und $e^{j\varphi}$ durch entsprechende lineare Taylor-Reihen gemäß Näherung (3) und (4) ersetzt werden und der Term $s(n \cdot T - \tau)$ durch Linearisierung um den Term $s(n \cdot T)$ mit der ersten Ableitung $s'(n \cdot T)$ des Sendesignals $s(t)$ nach der Zeit $t$, abgetastet mit der Abtastrate $\dfrac{1}{T}$, gemäß Näherung (5) bestimmt werden.

$$e^{j\omega \cdot n} \approx 1 + j\omega \cdot n \qquad\qquad (3)$$

$$e^{j\varphi} \approx 1 + j\varphi \qquad\qquad (4)$$

$$s(n \cdot T - \tau) \approx s(n \cdot T) - \tau \cdot s'(n \cdot T) \qquad\qquad (5)$$

Mit den Linearisierungen gemäß Gleichung (3), (4) und (5) ergibt sich für das Empfangssignal $r(n \cdot T)$ ausgehend von Gleichung (2) die mathematische Beziehung in Näherung (6).

$$r(n \cdot T) \approx g \cdot (s(n \cdot T) - \tau \cdot s'(n \cdot T)) \cdot (1 + j\omega \cdot n) \cdot (1 + j\varphi) + v(n \cdot T) \quad \text{mit}$$
$$n = 0, \ldots, N-1 \quad (6)$$

Zur Vereinfachung der Darstellung werden im Folgenden sämtliche von der Zeit abhängige Signalgrößen einzig durch den Zeitindex beschrieben (z.B. $r(n \cdot T) \to r(n)$).

Nach Ausmultiplizieren der mathematischen Beziehung in Gleichung (6) und erfindungsgemäßer Vernachlässigung aller Produkte mit mehreren kleinen Kenngrößen (während die Kenngrößen $\tau$, $\omega$ und $\varphi$ kleine Werte aufweisen, kann die Größe g durchaus auch große Werte annehmen) lässt sich Gleichung (6) nach Näherung (7) überführen.

$$r(n) \approx g \cdot s(n) - g \cdot \tau \cdot s'(n) + j\omega \cdot n \cdot g \cdot s(n) + j\varphi \cdot g \cdot s(n) + v(n)$$
$$\text{mit} \quad n = 0, \ldots, N-1 \qquad (7)$$

Die Log-Likelihood-Funktion $L(g, \tau, \omega, \varphi)$ ergibt sich gemäß Gleichung (8) aus der Summe der Betragsquadrate des Rauschsignals $v(n)$ über insgesamt $N$ Abtastzeitpunkte.

$$L(g,\tau,\omega,\varphi) = \sum_{n=0}^{N-1}\left|r(n) - g\cdot s(n) + g\cdot\tau\cdot s'(n) - j\omega\cdot n\cdot g\cdot s(n) - j\varphi\cdot g\cdot s(n)\right|^2 \tag{8}$$

Durch Ausmultiplizieren der mathematischen Beziehung für die Log-Likelihood-Funktion $L(g,\tau,\omega,\varphi)$ in Gleichung (8) ergibt sich eine mathematische Beziehung für die Log-Likelihood-Funktion $L(g,\tau,\omega,\varphi)$ in Gleichung (9) mit den Hilfsgrößen A, B, C, D, E, F, G, H, I, J und K gemäß Gleichung (10), (11), (12), (13), (14), (15), (16), (17), (18), (19) und (20).

$$L(g,\tau,\omega,\varphi) = \sum_{n=0}^{N-1}\left|r(n)\right|^2 - 2\cdot g\cdot A + 2\cdot g\cdot\tau\cdot B - 2\cdot g\cdot\omega\cdot C - 2\cdot g\cdot\varphi\cdot D +$$

$$g^2\cdot E - 2\cdot g^2\cdot\tau\cdot F + g^2\cdot\tau^2\cdot G - 2\cdot g^2\cdot\tau\cdot\omega\cdot I - 2\cdot g^2\cdot\tau\cdot\varphi\cdot J +$$

$$g^2\cdot\omega^2\cdot K + 2\cdot g^2\cdot\omega\cdot\varphi\cdot H + g^2\cdot\varphi^2\cdot E \tag{9}$$

mit

$$A = \sum_{n=0}^{N-1}\mathrm{Re}\left\{r(n)\cdot s^*(n)\right\} \tag{10}$$

$$B = \sum_{n=0}^{N-1}\mathrm{Re}\left\{r(n)\cdot s'(n)^*\right\} \tag{11}$$

$$C = \sum_{n=0}^{N-1}\mathrm{Re}\left\{n\cdot r(n)\left(js(n)\right)^*\right\} \tag{12}$$

$$D = \sum_{n=0}^{N-1}\mathrm{Re}\left\{r(n)\cdot\left(js(n)\right)^*\right\} \tag{13}$$

$$E = \sum_{n=0}^{N-1}\left|s(n)\right|^2 \tag{14}$$

$$F = \sum_{n=0}^{N-1}\mathrm{Re}\left\{s(n)\cdot s'(n)^*\right\} \tag{15}$$

$$G = \sum_{n=0}^{N-1}\left|s'(n)\right|^2 \tag{16}$$

$$H = \sum_{n=0}^{N-1}\left|s(n)\right|^2\cdot n \tag{17}$$

$$I = \sum_{n=0}^{N-1} \operatorname{Re}\left\{n \cdot s'(n) \cdot (js(n))^{*}\right\} \qquad (18)$$

$$J = \sum_{n=0}^{N-1} \operatorname{Re}\left\{s'(n) \cdot (js(n))^{*}\right\} \qquad (19)$$

$$K = \sum_{n=0}^{N-1} |s(n)|^{2} \cdot n^{2} \qquad (20)$$

Nach dem Maximum-Likelihood-Ansatz wird die Log-Likelihood-Funktion $L(g,\tau,\omega,\varphi)$ bezüglich der Kenngrößen $g$, $\tau$, $\omega$ und $\varphi$ maximiert. Somit wird beim Maximum-Likelihood-Ansatz der Gradient mit den Ableitungen der Log-Likelihood-Funktion $L(g,\tau,\omega,\varphi)$ über alle zu schätzenden Kenngrößen $\hat{g}$, $\hat{\tau}$, $\hat{\omega}$ und $\hat{\varphi}$ gebildet und jeweils zu Null gesetzt.

Die partielle Ableitung der Log-Likelihood-Funktion $L(g,\tau,\omega,\varphi)$ über den zu schätzenden Verstärkungsfaktor $g$ ergibt sich gemäß Gleichung (21).

$$\frac{\partial L(g,\tau,\omega,\varphi)}{\partial g} = -A + \hat{\tau}\cdot B - \hat{\omega}\cdot C - \hat{\varphi}\cdot D + \hat{g}\cdot E - 2\cdot\hat{g}\cdot\hat{\tau}\cdot F + \hat{g}\cdot\hat{\tau}^{2}\cdot G -$$

$$2\cdot\hat{g}\cdot\hat{\tau}\cdot\hat{\omega}\cdot I - 2\cdot\hat{g}\cdot\hat{\tau}\cdot\hat{\varphi}\cdot J + \hat{g}\cdot\hat{\omega}^{2}\cdot K + 2\cdot\hat{g}\cdot\hat{\omega}\cdot\hat{\varphi}\cdot H + \hat{g}\cdot\hat{\varphi}^{2}\cdot E = 0$$

$$(21)$$

Die partielle Ableitung der Log-Likelihood-Funktion $L(g,\tau,\omega,\varphi)$ über den zu schätzenden Zeitversatz $\hat{\varepsilon}$ ergibt sich gemäß Gleichung (22).

$$\frac{\partial L(g,\tau,\omega,\varphi)}{\partial \varepsilon} = 2\cdot\hat{g}\cdot B - 2\cdot\hat{g}^{2}\cdot F + 2\cdot\hat{\tau}\cdot\hat{g}^{2}\cdot G - 2\cdot\hat{g}^{2}\cdot\hat{\omega}\cdot I - 2\cdot\hat{g}^{2}\cdot\hat{\varphi}\cdot J = 0$$

$$(22)$$

Da der zu schätzende Verstärkungsfaktor $g$ ungleich Null ist, lässt sich Gleichung (22) zu Gleichung (23) vereinfachen.

$$\hat{\tau}\cdot\hat{g}\cdot G - \hat{g}\cdot\hat{\omega}\cdot I - \hat{g}\cdot\hat{\varphi}\cdot J = -B + \hat{g}\cdot F \qquad (23)$$

Die partielle Ableitung der Log-Likelihood-Funktion $L(g,\tau,\omega,\varphi)$ über den zu schätzenden Frequenzversatz $\hat{\omega}$ ergibt sich gemäß Gleichung (24).

$$\frac{\partial L(g,\tau,\omega,\varphi)}{\partial \omega} = -2\cdot\hat{g}\cdot C - 2\cdot\hat{\tau}\cdot\hat{g}^{2}\cdot I + 2\cdot\hat{g}^{2}\cdot\hat{\omega}\cdot K + 2\cdot\hat{g}^{2}\cdot\hat{\varphi}\cdot H = 0$$

$$(24)$$

Auch Gleichung (24) lässt sich wegen des zu schätzenden Verstärkungsfaktors $\hat{g}$, der ungleich Null ist, vereinfachen und nach Gleichung (25) überführen.

$$-\hat{\tau}\cdot\hat{g}\cdot I + \hat{g}\cdot\hat{\omega}\cdot K + \hat{g}\cdot\hat{\varphi}\cdot H = C \qquad (25)$$

Die partielle Ableitung der Log-Likelihood-Funktion $L(g,\tau,\omega,\varphi)$ über den zu schätzenden Phasenversatz $\varphi$ ergibt sich gemäß Gleichung (26).

$$\frac{\partial L(g,\tau,\omega,\varphi)}{\partial \varphi} = -2\cdot \hat{g}\cdot D - 2\cdot \hat{\tau}\cdot \hat{g}^2\cdot J + 2\cdot \hat{g}^2\cdot \hat{\omega}\cdot H + 2\cdot \hat{g}^2\cdot \hat{\varphi}\cdot E = 0 \tag{26}$$

Auch Gleichung (26) lässt sich wegen des zu schätzenden Verstärkungsfaktors $\hat{g}$, der ungleich Null ist, vereinfachen und nach Gleichung (27) überführen.

$$-\hat{\tau}\cdot \hat{g}\cdot J + \hat{g}\cdot \hat{\omega}\cdot H + \hat{g}\cdot \hat{\varphi}\cdot E = D \tag{27}$$

Die Gleichungen (21), (23), (25) und (27) stellen ein nicht-lineares Gleichungssystem für die zu schätzenden Kenngrößen $\hat{g}$, $\hat{\tau}$, $\hat{\omega}$ und $\hat{\varphi}$ dar, das geschlossen nicht lösbar ist.

Reduziert man das Gleichungssystem auf die Gleichungen (23), (25) und (27), so ist aus den Gleichungen (23), (25) und (27) zu erkennen, dass in allen Termen des Gleichungssystems nichtlineare Produkte von zwei Kenngrößen enthalten sind, wobei in allen Produkten jeweils der zu schätzende Verstärkungsfaktor $\hat{g}$ auftritt.

Um diese Nichtlinearität in den Gleichungen (23), (25) und (27) zu beseitigen, ist durch eine mathematische Umformung von Gleichung (21) eine mathematische Beziehung für den zu schätzenden Verstärkungsfaktor $\hat{g}$ zu ermitteln, die entweder keine funktionale Abhängigkeit von den übrigen zu schätzenden Kenngrößen $\hat{\tau}$, $\hat{\omega}$ und $\hat{\varphi}$ oder einzig im Nennerterm eine lineare Abhängigkeit von einer oder mehreren der übrigen zu schätzenden Kenngrößen $\hat{\tau}$, $\hat{\omega}$ und $\hat{\varphi}$ aufweisen darf.

Hierzu werden die einzelnen Terme von Gleichung (21) gemäß Gleichung (28) so umsortiert, dass man leicht erkennen kann, wie man durch leichte algebraische Umformungen Terme erhält, die einzig vom zu schätzenden Verstärkungsfaktor $\hat{g}$ oder von keinem der zu schätzenden Kenngrößen $\hat{g}$, $\hat{\tau}$, $\hat{\omega}$ und $\hat{\varphi}$ abhängen.

$$\begin{aligned}
& \hat{g}\cdot \hat{\tau}^2\cdot G - \hat{g}\cdot \hat{\tau}\cdot \hat{\omega}\cdot I - \hat{g}\cdot \hat{\tau}\cdot \hat{\varphi}\cdot J \\
& -\hat{g}\cdot \hat{\tau}\cdot \hat{\omega}\cdot I + \hat{g}\cdot \hat{\omega}^2\cdot K + \hat{g}\cdot \hat{\omega}\cdot \hat{\varphi}\cdot H \\
& -\hat{g}\cdot \hat{\tau}\cdot \hat{\varphi}\cdot J + \hat{g}\cdot \hat{\omega}\cdot \hat{\varphi}\cdot H + \hat{g}\cdot \hat{\varphi}^2\cdot E = \\
& = -\hat{\tau}\cdot B + \hat{g}\cdot \hat{\tau}\cdot F \\
& +\hat{\omega}\cdot C \\
& +\hat{\varphi}\cdot D \\
& +\hat{g}\cdot \hat{\tau}\cdot F + A - \hat{g}\cdot E
\end{aligned} \tag{28}$$

Multipliziert man Gleichung (23) mit dem zu schätzenden Zeitversatz $\hat{\tau}$ und subtrahiert man die daraus entstehende Gleichung von Gleichung (28), so treten in Gleichung (28) die in der ersten Zeile der linken und rechten Gleichungsseite auftretenden Terme nicht mehr auf.

Multipliziert man Gleichung (25) mit dem zu schätzenden Frequenzversatz $\hat{\omega}$ und subtrahiert man die daraus entstehende Gleichung von Gleichung (28), so treten in Gleichung (28) die in der zweiten Zeile der linken und rechten Gleichungsseite auftretenden Terme nicht mehr auf.

Multipliziert man Gleichung (27) mit dem zu schätzenden Phasenversatz $\hat{\varphi}$ und subtrahiert man die daraus entstehende Gleichung von Gleichung (28), so treten in Gleichung (28) die in der dritten Zeile der linken und rechten Gleichungsseite auftretenden Terme nicht mehr auf.

In der daraus entstehenden Gleichung (29) treten nur noch die in Gleichung (28) in der vierten Zeile der rechten Gleichungsseite enthaltenen Terme auf.

$$0 = \hat{g}\cdot \hat{\tau}\cdot F + A - \hat{g}\cdot E \tag{29}$$

Gleichung (29) nach dem zu schätzenden Verstärkungsfaktor $\hat{g}$ umgeformt ergibt Gleichung (30).

$$\hat{g} = \frac{A}{E - \hat{\tau}\cdot F} \tag{30}$$

Setzt man die mathematische Beziehung für den zu schätzenden Verstärkungsfaktor $\hat{g}$ aus Gleichung (30) in die Gleichungen (23), (25) und (27) ein, so erhält man ein lineares Gleichungssystem - Gleichungen (31), (32) und (33) - für die zu schätzenden Kenngrößen $\hat{\tau}$, $\hat{\omega}$ und $\hat{\varphi}$.

$$\hat{\tau} \cdot (G \cdot A - B \cdot F) - \hat{\omega} \cdot I \cdot A - \hat{\varphi} \cdot J \cdot A = -B \cdot E + F \cdot A \qquad (31)$$

$$\hat{\tau} \cdot (C \cdot F - I \cdot A) + \hat{\omega} \cdot K \cdot A + \hat{\varphi} \cdot H \cdot A = C \cdot E \qquad (32)$$

$$\hat{\tau} \cdot (D \cdot F - J \cdot A) + \hat{\omega} \cdot H \cdot A + \hat{\varphi} \cdot E \cdot A = D \cdot E \qquad (33)$$

Unter Einführung der Zwischengrößen $\alpha_{11}$, $\alpha_{12}$, $\alpha_{13}$, $\alpha_{21}$, $\alpha_{22}$, $\alpha_{23}$, $\alpha_{31}$, $\alpha_{32}$, $\alpha_{33}$, $\beta_1$, $\beta_2$, $\beta_3$ und $\gamma$ gemäß den Gleichungen (34), (35), (36), (37), (38), (39), (40), (41), (42), (43), (44), (45) und (46) ergeben sich die zu schätzenden Kenngrößen $\hat{\tau}$, $\hat{\omega}$ und $\hat{\varphi}$ gemäß Gleichung (47), (48) und (49).

$$\alpha_{11} = G \cdot A - B \cdot F \qquad (34)$$

$$\alpha_{12} = -I \cdot A \qquad (35)$$

$$\alpha_{13} = -J \cdot A \qquad (36)$$

$$\alpha_{21} = C \cdot F - I \cdot A \qquad (37)$$

$$\alpha_{22} = K \cdot A \qquad (38)$$

$$\alpha_{23} = H \cdot A \qquad (39)$$

$$\alpha_{31} = D \cdot F - J \cdot A \qquad (40)$$

$$\alpha_{32} = H \cdot A \qquad (41)$$

$$\alpha_{33} = E \cdot A \qquad (42)$$

$$\beta_1 = -B \cdot E + F \cdot A \qquad (43)$$

$$\beta_2 = C \cdot E \qquad (44)$$

$$\beta_3 = D \cdot E \qquad (45)$$

$$\gamma = \alpha_{11} \cdot \alpha_{22} \cdot \alpha_{33} + \alpha_{21} \cdot \alpha_{32} \cdot \alpha_{13} + \alpha_{31} \cdot \alpha_{12} \cdot \alpha_{23} - \alpha_{31} \cdot \alpha_{22} \cdot \alpha_{13} \\ -\alpha_{11} \cdot \alpha_{32} \cdot \alpha_{23} - \alpha_{21} \cdot \alpha_{12} \cdot \alpha_{33} \qquad (46)$$

$$\hat{\tau} = \frac{(\beta_1 \cdot \alpha_{22} \cdot \alpha_{33} + \beta_2 \cdot \alpha_{32} \cdot \alpha_{13} + \beta_3 \cdot \alpha_{12} \cdot \alpha_{23} - \beta_3 \cdot \alpha_{22} \cdot \alpha_{13} - \beta_1 \cdot \alpha_{32} \cdot \alpha_{23} - \beta_2 \cdot \alpha_{12} \cdot \alpha_{33}}{\gamma} \qquad (47)$$

$$\hat{\omega} = \frac{(\beta_2 \cdot \alpha_{11} \cdot \alpha_{33} + \beta_3 \cdot \alpha_{21} \cdot \alpha_{13} + \beta_1 \cdot \alpha_{31} \cdot \alpha_{23} - \beta_2 \cdot \alpha_{31} \cdot \alpha_{13} - \beta_3 \cdot \alpha_{11} \cdot \alpha_{23} - \beta_1 \cdot \alpha_{21} \cdot \alpha_{33}}{\gamma} \qquad (48)$$

$$\hat{\varphi} = \frac{(\beta_3 \cdot \alpha_{11} \cdot \alpha_{22} + \beta_1 \cdot \alpha_{21} \cdot \alpha_{32} + \beta_2 \cdot \alpha_{12} \cdot \alpha_{31} - \beta_1 \cdot \alpha_{22} \cdot \alpha_{31} - \beta_2 \cdot \alpha_{11} \cdot \alpha_{32} - \beta_3 \cdot \alpha_{12} \cdot \alpha_{21}}{\gamma} \qquad (49)$$

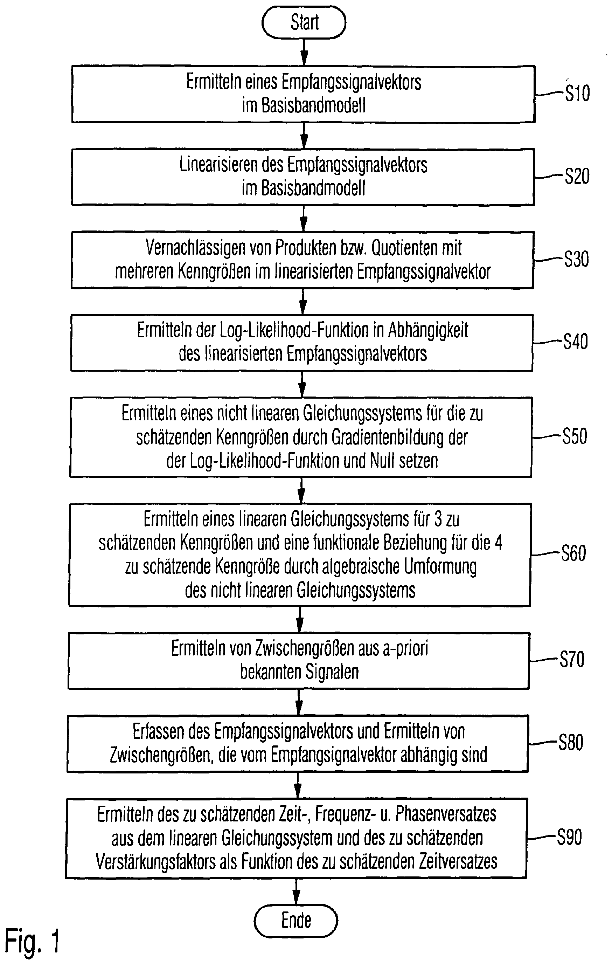

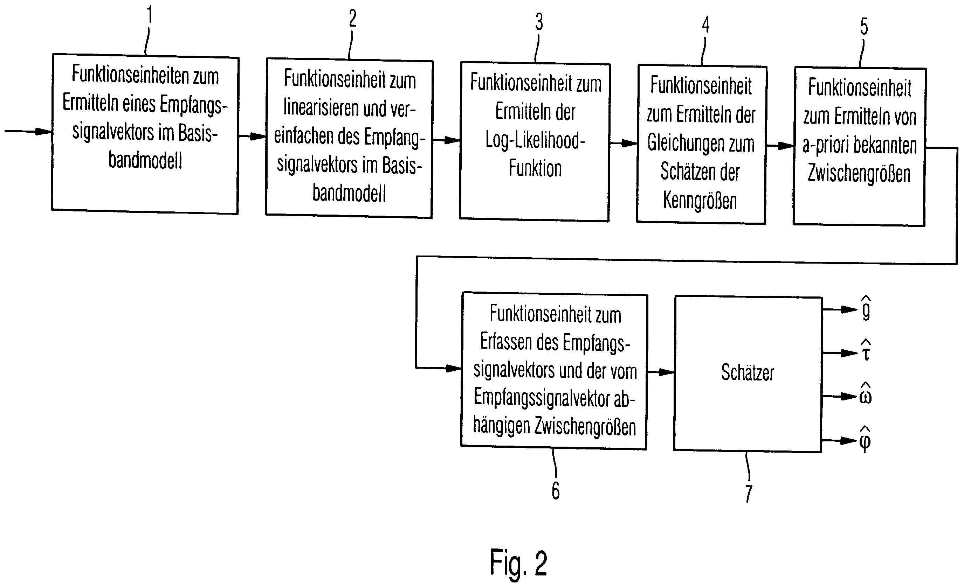

Im Folgenden wird das erfindungsgemäße Verfahren zum gemeinsamen Schätzen mehrerer Kenngrößen eines Übertragungskanals anhand des Flussdiagramms in Fig. 1 in Kombination mit der erfindungsgemäßen Vorrichtung zum gemeinsamen Schätzen mehrerer Kenngrößen eines Übertragungskanals anhand des Blockdiagramms in Fig. 2 beschrieben:

Im ersten Verfahrensschritt S10 wird in einer Funktionseinheit 1 zum Ermitteln eines Empfangssignalvektors im Basisbandmodell in Anlehnung an Gleichung (1) bzw. (2) der Empfangssignalvektor $r(n \cdot T)$ bzw. $r(n)$ in Abhängigkeit des Sendesignalvektors $s(n \cdot T)$ bzw. $s(n)$, des Rauschsignalvektors $v(n \cdot T)$ bzw. $v(n)$ und der zu schätzenden Kenngrößen $\hat{g}$, $\hat{\tau}$, $\hat{\Delta f}$ bzw. $\hat{\omega}$ und $\hat{\varphi}$ bestimmt.

Im nächsten Verfahrensschritt S20 erfolgt in einer Funktionseinheit 2 zum Linearisieren und Vereinfachen des Empfangssignalvektors im Basisband eine Linearisierung der nichtlinearen Exponentialterme $e^{j\omega \cdot n}$ und $e^{j\varphi}$ durch eine Taylor-Reihe gemäß Gleichung (3) und (4) sowie des zeitverschobenen Terms $s(n \cdot T - \tau)$ mittels Differentialterm gemäß Gleichung (5).

In derselben Funktionseinheit 2 zum Linearisieren und Vereinfachen des Empfangssignalvektors im Basisband erfolgt im anschließenden Verfahrensschritt S30 eine Vereinfachung des gemäß Gleichung (6) linearisierten Empfangssignalvektor $r(n)$ im Basisbandmodell, indem sämtliche Produkte mit mehreren zu schätzenden Kenngrößen gemäß Gleichung (7) erfindungsgemäß eliminiert werden.

Auf der Basis des linearisierten und vereinfachten Empfangssignalvektor $r(n)$ wird im nächsten Verfahrensschritt S40 in einer Funktionseinheit 3 zur Ermittlung der Log-Likelihood-Funktion die Log-Likelihood-Funktion $L(g, \tau, \omega, \varphi)$ gemäß Gleichung (8) als Summe der Betragsquadrate des Rauschsignals $v(n)$ über insgesamt $N$ Abtastzeitpunkte bestimmt und gemäß Gleichung (9) in ihre einzelnen Terme zerlegt.

Im nächsten Verfahrensschritt S50 wird in einer Funktionseinheit 4 zum Ermitteln von Gleichungen zum Schätzen von Kenngrößen ein nichtlineares Gleichungssystem mit den Gleichungen (21), (23), (25) und (27) für die zu schätzenden Kenngrößen $\hat{g}$, $\hat{\tau}$, $\hat{\omega}$ und $\hat{\varphi}$ durch Bilden der Gradienten mit den Ableitungen der Log-Likelihood-Funktion $L(g, \tau, \omega, \varphi)$ über die einzelnen zu schätzenden Kenngrößen $\hat{g}$, $\hat{\tau}$, $\hat{\omega}$ und $\hat{\varphi}$ und anschließendes Nullsetzen der ermittelten Gradienten ermittelt.

Da dieses nichtlineare Gleichungssystem nicht geschlossen lösbar ist, wird im nächsten Verfahrensschritt S60 ebenfalls in der Funktionseinheit 4 zum Ermitteln von Gleichungen zum Schätzen von Kenngrößen durch geschickte mathematische Umformung, wie oben in der mathematischen Herleitung gezeigt wurde, ein lineares und damit geschlossen lösbares Gleichungssystem gemäß den Gleichungen (47), (48) und (49) für die zu schätzenden Kenngrößen $\hat{\tau}$, $\hat{\omega}$ und $\hat{\varphi}$ und eine funktionale Beziehung gemäß Gleichung (30) für den zu schätzenden Verstärkungsfaktor $\hat{g}$ in Abhängigkeit des zu den schätzenden Zeitoffsets $\hat{\tau}$ ermittelt.

Im nächsten Verfahrensschritt S70 werden in einer Funktionseinheit 5 zum Ermitteln von a-priori bekannten Zwischengrößen aus den a-priori bekannten Signalverläufen - dem Sendesignalvektor $s(n \cdot T)$ und dem Vektor $s'(n \cdot T)$ mit den ersten Ableitungen des Sendesignalvektors $s(t)$ nach der Zeit $t$ abgetastet mit der Abtastrate $\frac{1}{T}$ die Zwischengrößen $E, F, G, H, I, J$ und $K$ gemäß den Gleichungen (14) bis (20) vorab bestimmt.

Im nächsten Verfahrensschritt S80 wird in einer Funktionseinheit 6 zum Erfassen des Empfangssignalvektors und zum Ermitteln von Zwischengrößen, die vom Empfangssignalvektor abhängig sind, der Empfangssignalvektor $r(n \cdot T)$ in Blöcken von typischerweise einer Blocklänge $N$ gemessen und die Zwischengrößen $A, B, C$ und $D$, die vom Empfangssignalvektor $r(n \cdot T)$ abhängig sind, gemäß der Gleichungen (10) bis (13) in Blöcken bestimmt. Zur Verbesserung der Genauigkeit der Schätzung können hierbei mehrere aufeinander folgende oder überlappende Blöcke benutzt werden.

Im abschließenden Verfahrensschritt S90 werden in einem Schätzer 7 bevorzugt einmalig - aber durchaus auch kontinuierlich im Raster eines Abtastintervalls $T$ oder blockorientiert in Blöcken mit typischerweise einer Blocklänge $N$- der zu schätzende Zeitversatz $\hat{\tau}$ anhand der Gleichung (47), der zu schätzende Frequenzversatz $\hat{\omega}$ anhand der Gleichung (48) und der zu schätzende Phasenversatz $\hat{\varphi}$ anhand der Gleichung (49) bestimmt, die jeweils von den in den Verfahrensschritten S70 und S80 ermittelten Zwischengrößen abhängig sind. Schließlich erfolgt in Verfahrensschritt S90 auch die Bestimmung des zu schätzenden Verstärkungsfaktors $\hat{g}$ bevorzugt einmalig - aber durchaus auch kontinuierlich im Raster eines Abtastintervalls $T$ oder blockorientiert in Blöcken mit typischerweise einer Blocklänge $N$ - anhand der funktionalen Beziehung in Gleichung (30) zum zu schätzenden und bereits ermittelten Zeitversatz $\hat{\tau}$.

Zusätzlich wird mit den geschätzten Kenngrößen $\hat{g}$, $\hat{\tau}$, $\hat{\omega}$ und $\hat{\varphi}$ ein optimierter Empfangssignalvektor $r(n \cdot T)$ bestimmt. Mit dem optimierten Empfangssignalvektor $r(n \cdot T)$ werden in einer weiteren Iterationsstufe mit dem erfindungsgemäßen Verfahren und der erfindungsgemäßen Vorrichtung iterativ optimierte Kenngrößen $\hat{g}$, $\hat{\tau}$, $\hat{\omega}$ und $\hat{\varphi}$ ermittelt. Über mehrere Iterationen können die zu schätzenden Kenngrößen $\hat{g}$, $\hat{\tau}$, $\hat{\omega}$ und $\hat{\varphi}$ sukzessive in ihrer Genauigkeit optimiert werden.

Die Erfindung ist nicht auf die dargestellte Ausführungsform des erfindungsgemäßen Verfahrens und der erfindungsgemäßen Vorrichtung beschränkt. Insbesondere kann anstatt der beschriebenen Log-Likelihood-Funktion auch eine andere Likelihood-Funktion (Wahrscheinlichkeitsfunktion bzw. Kostenfunktion) eingesetzt werden. Die Anwendung des erfindungsgemäßen Verfahrens und der erfindungsgemäßen Vorrichtung ist nicht nur auf die Nachrichtentechnik beschränkt, sondern kann auf alle technischen Systeme, beispielsweise in der Akustik oder in der Sprachverarbeitung, übertragen werden, die eine Systemcharakteristik gemäß Gleichung (1) aufweisen.

## Patentansprüche

1. Verfahren zum gemeinsamen Ermitteln mehrerer zu schätzender Kenngrößen $(\hat{g}, \hat{\tau}, \hat{\omega}, \hat{\varphi})$ eines Übertragungskanals mit folgenden Verfahrensschritten:

   • Erfassen (S10) eines Empfangssignalvektors, $r(n)$,
   • Ermitteln (S80) von mehreren verschiedenen Signalgrößen, die jeweils auf verschiedene Weise von den Abtastwerten des Empfangssignalvektors, $r(n)$, und/oder eines a-priori bekannten Sendesignalvektors, $s(n)$, abhängig sind,
   • Ermitteln (S90) eines zu schätzenden Zeitversatzes $(\hat{\tau})$, eines zu schätzenden Frequenzversatzes $(\hat{\omega})$ und eines zu schätzenden Phasenversatzes $(\hat{\varphi})$ des Übertragungskanals durch Lösen eines von den ermittelten Signalgrößen abhängigen, linearen Gleichungssystems und eines zu schätzenden Verstärkungsfaktors $(\hat{g})$ des Übertragungskanals als Funktion des zu schätzenden Zeitversatzes $(\hat{\tau})$,

   wobei sich das lineare Gleichungssystem und die Funktion des zu schätzenden Verstärkungsfaktors $(\hat{g})$ in Abhängigkeit des zu schätzenden Zeitversatzes $(\hat{\tau})$ aus der Maximierung einer Likelihood-Funktion, $L(g, \tau, \omega, \varphi)$, bezüglich der zu schätzenden Kenngrößen $(\hat{g}, \hat{\tau}, \hat{\omega}, \hat{\varphi})$ ergibt, wobei die Likelihood-Funktion, $L(g, \tau, \omega, \varphi)$, in Abhängigkeit der zu schätzenden Kenngrößen $(\hat{g}, \hat{\tau}, \hat{\omega}, \hat{\varphi})$ des Übertragungskanals und der ermittelten Signalgrößen aus einem Basisbandmodell des Empfangssignalvektors, $r(n)$, ermittelt ist.

2. Verfahren zum gemeinsamen Schätzen nach Anspruch 1,
   **dadurch gekennzeichnet,**
   **dass** die funktionale Abhängigkeit der Signalgrößen durch Ermitteln des Empfangssignalvektors, $r(n)$, im Basisbandmodell, Linearisieren des Empfangssignalvektors, $r(n)$, und Ermitteln der Likelihood-Funktion, $L(g, \tau, \omega, \varphi)$, in Abhängigkeit des linearisierten Empfangssignalvektors, $r(n)$, bestimmt wird.

3. Verfahren zum gemeinsamen Schätzen nach Anspruch 2,
   **dadurch gekennzeichnet,**
   **dass** im linearisierten Empfangssignalvektor, $r(n)$, Produkte mit mehreren zu schätzenden Kenngrößen $(\hat{g}, \hat{\tau}, \hat{\omega}, \hat{\varphi})$ nicht berücksichtigt werden.

4. Verfahren zum gemeinsamen Schätzen nach einem der Ansprüche 1 bis 3,
   **dadurch gekennzeichnet,**
   **dass** durch Ermitteln eines Gradienten mit den Ableitungen der Likelihood-Funktion, $L(g, \tau, \omega, \varphi)$, über die zu schätzenden Kenngrößen $(\hat{g}, \hat{\tau}, \hat{\omega}, \hat{\varphi})$ des Übertragungskanals und Nullsetzen des Gradienten ein nicht lineares Gleichungssystem ermittelt wird, das durch algebraische Umformung in das lineare Gleichungssystem für den zu schätzenden Zeit-, Frequenz- und Phasenversatz $(\tau, \omega, \varphi)$ und die funktionale Beziehung zwischen dem zu schätzenden Verstärkungsfaktor $(\hat{g})$ und dem zu schätzenden Zeitversatz $(\hat{\tau})$ überführbar ist.

**5.** Verfahren nach einem der Ansprüche 2 bis 4,
**dadurch gekennzeichnet,**
**dass** der Empfangssignalvektor, $r(n)$, im Basisbandmodell in Abhängigkeit eines Sendesignalvektors, $s(n)$, eines Rauschsignalvektors, $v(n)$, und der zu schätzenden Kenngrößen $(\hat{g},\hat{\tau},\hat{\omega},\hat{\varphi})$ des Übertragungskanals bestimmt wird.

**6.** Vorrichtung zum gemeinsamen Schätzen mehrerer Kenngrößen eines Übertragungskanals mit einer Funktionseinheit (6) zum Erfassen eines Empfangssignalvektors, $r(n)$, einer Funktionseinheit (5) zum Ermitteln von mehreren verschiedenen Signalgrößen, die jeweils auf verschiedene Weise vom Empfangssignalvektor, $r(n)$, und/oder vom a-priori bekannten Sendesignalvektor, $s(n)$, abhängig sind, und einem Schätzer (7) zum Ermitteln eines zu schätzenden Zeitversatzes $(\hat{\tau})$, eines zu schätzenden Frequenzversatzes $(\hat{\omega})$ und eines zu schätzenden Phasenversatzes $(\hat{\varphi})$ des Übertragungskanals durch Lösen eines von den ermittelten Signalgrößen abhängigen, linearen Gleichungssystems und eines zu schätzenden Verstärkungsfaktors $(\hat{g})$ des Übertragungskanals als Funktion des zu schätzenden Zeitversatzes $(\hat{\tau})$,
wobei sich das lineare Gleichungssystem und die Funktion des zu schätzenden Verstärkungsfaktors $(\hat{g})$ in Abhängigkeit des zu schätzenden Zeitversatzes $(\hat{\tau})$ aus der Maximierung einer Likelihood-Funktion, $L(g,\tau,\omega,\varphi)$, bezüglich der zu schätzenden Kenngrößen $(\hat{g},\hat{\tau},\hat{\omega},\hat{\varphi})$ ergibt, wobei die Likelihood-Funktion, $L(g,\tau,\omega,\varphi)$, in Abhängigkeit der zu schätzenden Kenngrößen $(\hat{g},\hat{\tau},\hat{\omega},\hat{\varphi})$ des Übertragungskanals und der ermittelten Signalgrößen aus einem Basisbandmodell des Empfangssignalvektors, $r(n)$, ermittelt ist.

**7.** Computerprogramm mit Programmcode-Mitteln, um alle Schritte gemäß einem der Ansprüche 1 bis 5 durchführen zu können, wenn das Programm auf einem Computer oder einem digitalen Signalprozessor ausgeführt wird.

**8.** Computerprogramm-Produkt mit auf einem maschinenlesbaren Träger gespeicherten Programmcode-Mitteln, um alle Schritte gemäß einem der Ansprüche 1 bis 5 durchführen zu können, wenn das Programm auf einem Computer oder einem digitalen Signalprozessor ausgeführt wird.

**Claims**

**1.** Method for joint determination of a plurality of parameters to be assessed $(\hat{g},\hat{\tau},\hat{\omega},\hat{\phi})$ of a transmission channel with the following method steps:

- acquisition (S10) of a reception signal vector $r(n)$,
- determination (S80) of a plurality of different signal parameters each of which are dependent in different ways on the sampled values of the reception signal vector $r(n)$ and/or on an a priori known transmission signal vector $s(n)$,
- determination (S90) of a time offset $(\hat{\tau})$ to be assessed, a frequency offset $(\hat{\omega})$ to be assessed and a phase offset $(\hat{\phi})$ to be assessed of the transmission channel by solving a linear equation system dependent on the determined signal parameters and a gain $(\hat{g})$ to be assessed of the transmission channel as a function of the time offset $(\hat{\tau})$ to be assessed,

wherein the linear equation system and the function of the gain $(\hat{g})$ to be assessed dependent on the time offset $(\hat{\tau})$ to be assessed is obtained from maximisation of a likelihood function $L(g,\tau,\omega,\phi)$ with respect to the parameters $(\hat{g},\hat{\tau},\hat{\omega},\hat{\phi})$ to be assessed, wherein the likelihood function $L(g,\tau,\omega,\phi)$ is determined dependent on the parameters $(\hat{g},\hat{\tau},\hat{\omega},\hat{\phi})$ to be assessed of the transmission channel and the determined signal parameters from a base band model of the reception signal vector $r(n)$.

**2.** Method for joint assessment according to claim 1,
**characterised in that**
the functional dependence of the signal parameters is established by determination of the reception signal vector $r(n)$ in the base band model, linearization of the reception signal vector $r(n)$ and determination of the likelihood function $L(g,\tau,\omega,\phi)$ dependent on the linearized reception signal vector $r(n)$.

**3.** Method for joint assessment according to claim 2,
**characterised in that**
products with a plurality of parameters $(\hat{g},\hat{\tau},\hat{\omega},\hat{\phi})$ to be assessed are not taken into account in the linearized reception signal vector $r(n)$.

4. Method for joint assessment according to one of claims 1 to 3,
**characterised in that**
by determining a gradient with the derivatives of the likelihood function $L(g,\tau,\omega,\phi)$ with respect to the parameters $(\hat{g}, \hat{\tau},\hat{\omega},\hat{\phi})$ to be assessed of the transmission channel and zeroing the gradient, a non-linear equation system is determined which can be converted algebraically into the linear equation system for the time offset, frequency offset and phase offset $(\hat{\tau},\hat{\omega},\hat{\phi})$ to be assessed and the functional relation between the gain $(\hat{g})$ to be assessed and the time offset $(\hat{\tau})$ to be assessed.

5. Method according to one of claims 2 to 4,
**characterised in that**
the reception signal vector $r(n)$ is established in the base band model dependent on a transmission signal vector $s(n)$, a noise signal vector $v(n)$ and the parameters $(\hat{g},\hat{\tau},\hat{\omega},\hat{\phi})$ to be assessed of the transmission channel.

6. Device for joint assessment of a plurality of parameters of a transmission channel with a function unit (6) for acquiring a reception signal vector $r(n)$,
a function unit (5) for determining a plurality of different signal parameters each of which are dependent in different ways on the reception signal vector $r(n)$ and/or on the a priori known transmission signal vector $s(n)$,
and an assessor (7) for determining a time offset $(\hat{\tau})$ to be assessed, a frequency offset $(\hat{\omega})$ to be assessed and a phase offset $(\hat{\phi})$ to be assessed of the transmission channel by solving a linear equation system dependent on the determined signal parameters and a gain $(\hat{g})$ to be assessed of the transmission channel as a function of the time offset $(\hat{\tau})$ to be assessed,
wherein the linear equation system and the function of the gain $(\hat{g})$ to be assessed dependent on the time offset $(\hat{\tau})$ to be assessed is obtained from maximisation of a likelihood function $L(g,\tau,\omega,\phi)$ with respect to the parameters $(\hat{g}, \hat{\tau},\hat{\omega},\hat{\phi})$ to be assessed, wherein the likelihood function $L(g,\tau,\omega,\phi)$ is determined dependent on the parameters $(\hat{g},\hat{\tau}, \hat{\omega},\hat{\phi})$ to be assessed of the transmission channel and the determined signal parameters from a base band model of the reception signal vector $r(n)$.

7. Computer programme with programme code means in order to be able to carry out all the steps according to one of claims 1 to 5 when the programme is implemented on a computer or a digital signal processor.

8. Computer programme product with programme code means stored on a machine-readable data storage medium in order to be able to carry out all the steps according to one of claims 1 to 5 when the programme is implemented on a computer or a digital signal processor.

**Revendications**

1. Procédé de détermination commune de plusieurs grandeurs caractéristiques $(\hat{g},\hat{\tau},\hat{\omega},\hat{\varphi})$ à estimer d'un canal de transmission, comprenant les étapes suivantes :

   • détection (S10) d'un vecteur de signal de réception $r(n)$,
   • détermination (S80) de plusieurs grandeurs de signal différentes, dépendantes chacune et de manière différente des valeurs de balayage du vecteur de signal de réception $r(n)$, et/ou d'un vecteur de signal d'émission $s(n)$ connu a priori,
   • détermination (S90) d'un décalage temporel $(\hat{\tau})$ à estimer, d'un décalage de fréquence $(\hat{\omega})$ à estimer et d'un décalage de phase $(\hat{\varphi})$ à estimer du canal de transmission par résolution d'un système d'équations linéaire dépendant des grandeurs de signal déterminées, et d'un facteur d'amplification $(\hat{g})$ à estimer du canal de transmission en tant que fonction du décalage temporel $(\hat{\tau})$ à estimer,

   dans lequel le système d'équations linéaire et la fonction du facteur d'amplification $(\hat{g})$ à estimer en fonction du décalage temporel $(\hat{\tau})$ à estimer résultent de la maximisation d'une fonction de vraisemblance $L(g,\tau,\omega,\varphi)$ relativement aux grandeurs caractéristiques $(\hat{g},\hat{\tau},\hat{\omega},\hat{\varphi})$ à estimer,
   dans lequel la fonction de vraisemblance $L(g,\tau,\omega,\varphi)$ est déterminée en fonction des grandeurs caractéristiques $(\hat{g}, \hat{\tau},\hat{\omega},\hat{\varphi})$ à estimer du canal de transmission et des grandeurs de signal déterminées, à partir d'un modèle de bande de base du vecteur de signal de réception $r(n)$.

2. Procédé de détermination commune selon la revendication 1,
**caractérisé**

**en ce que** la dépendance fonctionnelle des grandeurs de signal est déterminée par détermination du vecteur de signal de réception $r(n)$ dans le modèle de bande de base, linéarisation du vecteur de signal de réception $r(n)$ et détermination de la fonction de vraisemblance $L(g, \tau, \omega, \varphi)$ en fonction du vecteur de signal de réception $r(n)$ linéarisé.

3. Procédé de détermination commune selon la revendication 2,
**caractérisé**
**en ce que** des produits avec plusieurs grandeurs caractéristiques $(\hat{g}, \hat{\tau}, \hat{\omega}, \hat{\varphi})$ à estimer ne sont pas pris en compte dans le vecteur de signal de réception $r(n)$ linéarisé.

4. Procédé de détermination commune selon l'une des revendications 1 à 3,
**caractérisé**
**en ce qu'**un système d'équations non linéaire est déterminé par détermination d'un gradient avec les dérivées de la fonction de vraisemblance $L(g, \tau, \omega, \varphi)$ au moyen des grandeurs caractéristiques $(\hat{g}, \hat{\tau}, \hat{\omega}, \hat{\varphi})$ à estimer du canal de transmission et mise à zéro du gradient, lequel peut être transformé par transformation algébrique en le système d'équations linéaire pour le décalage temporel, de fréquence et de phase $(\hat{\tau}, \hat{\omega}, \hat{\varphi})$ à estimer et la relation fonctionnelle entre le facteur d'amplification $(\hat{g})$ à estimer et le décalage temporel $(\hat{\tau})$ à estimer.

5. Procédé selon l'une des revendications 2 à 4,
**caractérisé**
**en ce que** le vecteur de signal de réception $r(n)$ est déterminé dans le modèle de bande de base en fonction d'un vecteur de signal d'émission $s(n)$, d'un vecteur de signal de bruit $v(n)$, et des grandeurs caractéristiques $(\hat{g}, \hat{\tau}, \hat{\omega}, \hat{\varphi})$ à estimer du canal de transmission.

6. Dispositif pour l'estimation commune de plusieurs grandeurs caractéristiques d'un canal de transmission avec une unité fonctionnelle (6) pour la détection d'un vecteur de signal de réception $r(n)$, une unité fonctionnelle (5) pour la détermination de plusieurs grandeurs de signal différentes, dépendantes chacune et de manière différente du vecteur de signal de réception $r(n)$, et/ou du vecteur de signal d'émission s(n) connu a priori, et un estimateur (7) pour la détermination d'un décalage temporel $(\hat{\tau})$ à estimer, d'un décalage de fréquence $(\hat{\omega})$ à estimer et d'un décalage de phase $(\hat{\varphi})$ à estimer du canal de transmission par résolution d'un système d'équations linéaire dépendant des grandeurs de signal déterminées, et d'un facteur d'amplification $(\hat{g})$ à estimer du canal de transmission en tant que fonction du décalage temporel $(\hat{\tau})$ à estimer,
dans lequel le système d'équations linéaire et la fonction du facteur d'amplification $(\hat{g})$ à estimer en fonction du décalage temporel $(\hat{\tau})$ à estimer résultent de la maximisation d'une fonction de vraisemblance $L(g, \tau, \omega, \varphi)$ relativement aux grandeurs caractéristiques $(\hat{g}, \hat{\tau}, \hat{\omega}, \hat{\varphi})$ à estimer,
dans lequel la fonction de vraisemblance $L(g, \tau, \omega, \varphi)$ est déterminée en fonction des grandeurs caractéristiques $(\hat{g}, \hat{\tau}, \hat{\omega}, \hat{\varphi})$ à estimer du canal de transmission et des grandeurs de signal déterminées, à partir d'un modèle de bande de base du vecteur de signal de réception $r(n)$.

7. Programme informatique avec des moyens de code-programme permettant l'exécution de toutes les étapes selon l'une des revendications 1 à 5, quand le programme est lancé sur un ordinateur ou un processeur de signal numérique.

8. Produit de programme informatique avec des moyens de code-programme mémorisés sur un support lisible par une machine permettant l'exécution de toutes les étapes selon l'une des revendications 1 à 5, quand le programme est lancé sur un ordinateur ou un processeur de signal numérique.

Start

Ermitteln eines Empfangssignalvektors
im Basisbandmodell — S10

Linearisieren des Empfangssignalvektors
im Basisbandmodell — S20

Vernachlässigen von Produkten bzw. Quotienten mit
mehreren Kenngrößen im linearisierten Empfangssignalvektor — S30

Ermitteln der Log-Likelihood-Funktion in Abhängigkeit
des linearisierten Empfangssignalvektors — S40

Ermitteln eines nicht linearen Gleichungssystems für die zu
schätzenden Kenngrößen durch Gradientenbildung der
der Log-Likelihood-Funktion und Null setzen — S50

Ermitteln eines linearen Gleichungssystems für 3 zu
schätzenden Kenngrößen und eine funktionale Beziehung für die 4
zu schätzende Kenngröße durch algebraische Umformung
des nicht linearen Gleichungssystems — S60

Ermitteln von Zwischengrößen aus a-priori
bekannten Signalen — S70

Erfassen des Empfangssignalvektors und Ermitteln von
Zwischengrößen, die vom Empfangsignalvektor abhängig sind — S80

Ermitteln des zu schätzenden Zeit-, Frequenz- u. Phasenversatzes
aus dem linearen Gleichungssystem und des zu schätzenden
Verstärkungsfaktors als Funktion des zu schätzenden Zeitversatzes — S90

Ende

Fig. 1

EP 2 339 802 B1

| 1 | 2 | 3 | 4 | 5 |
|---|---|---|---|---|
| Funktionseinheiten zum Ermitteln eines Empfangs-signalvektors im Basis-bandmodell | Funktionseinheit zum linearisieren und ver-einfachen des Empfang-signalvektors im Basis-bandmodell | Funktionseinheit zum Ermitteln der Log-Likelihood-Funktion | Funktionseinheit zum Ermitteln der Gleichungen zum Schätzen der Kenngrößen | Funktionseinheit zum Ermitteln von a-priori bekannten Zwischengrößen |

| 6 | 7 |
|---|---|
| Funktionseinheit zum Erfassen des Empfangs-signalvektors und der vom Empfangssignalvektor ab-hängigen Zwischengrößen | Schätzer |

$\hat{g}$

$\hat{\tau}$

$\hat{\omega}$

$\hat{\varphi}$

Fig. 2

**IN DER BESCHREIBUNG AUFGEFÜHRTE DOKUMENTE**

**In der Beschreibung aufgeführte Patentdokumente**

- DE 10157247 B4
- DE 10206966 A1